Europäisches Patentamt

European Patent Office

Office européen des brevets

(19)

(11) Numéro de publication: **0 133 092**
**A1**

(12) **DEMANDE DE BREVET EUROPEEN**

(21) Numéro de dépôt: **84401471.2**

(22) Date de dépôt: **11.07.84**

(51) Int. Cl.⁴: **F 16 K 5/06**

(30) Priorité: **13.07.83 FR 8311683**

(43) Date de publication de la demande:
**13.02.85 Bulletin 85/7**

(84) Etats contractants désignés:
**AT BE CH DE GB IT LI LU NL SE**

(71) Demandeur: **GACHOT S.A.**
**26 bis, Avenue de Paris**
**F-95230 Soisy-sous-Montmorency(FR)**

(72) Inventeur: **Frere, Claude**
**13 rue du Buisson Saint-Rémy**
**F-95640 Marine(FR)**

(74) Mandataire: **Bouju, André**
**38 Avenue de la Grande Armée**
**F-75017 Paris(FR)**

(54) **Robinet à boule.**

(57) Robinet à boule comprenant un corps (1) surmonté d'un organe de commande (2) en prise avec une boule obturatrice (3) percée d'un canal diamétral (4) logée dans le corps du robinet, montée rotativement autour de l'axe de l'organe de commande et en contact avec deux joints annulaires (5) d'étanchéité.

Du côté à l'organe de commande (2) le corps (1) comporte une coupelle d'appui (21) rapportée pour la boule (3), présentant un évidement (22) sensiblement coaxial à l'axe de rotation (A-A) de la boule (3), avec lequel cette dernière vient en contact, des moyens étant prévus pour assurer le guidage en rotation de la boule (3) par interaction de celle-ci et de ladite coupelle d'appui (21).

Application à la fabrication de robinets en matière plastique.

FIG_1

EP 0 133 092 A1

"Robinet à boule"

La présente invention concerne un robinet du genre dit robinet à boule, dans lequel l'organe obturateur -ou boule- constitué par une sphère tronquée et percée d'un canal diamétral est monté rotativement dans le corps du robinet. De tels robinets sont bien connus notamment pour les usages industriels; ils présentent en effet de nombreux avantages.

Dans de nombreux robinets à boule, cette dernière est maintenue entre deux sièges annulaires, en élastomère ou en matière polyfluorée telle que le PTFE. Ces sièges sont disposés coaxialement à la tuyauterie, ils sont serrés par les brides contre la boule et ils assurent ainsi à la fois le centrage de la boule et l'étanchéité de la liaison.

Cette structure présente toutefois divers inconvénients et servitudes. Tout d'abord les sièges travaillent dans des conditions difficiles et il peut se produire au montage ou à l'usage des défauts de serrage ou de centrage de la boule, laquelle peut en outre vibrer. Il s'ensuit que l'usinage de certaines pièces essentielles (corps, boule notamment) doit être précis, ces pièces étant nécessairement réalisées en métal. En second lieu, la mise en place de la boule à l'intérieur du corps est souvent délicate de même que le montage correct de la liaison entre la boule et la tige de commande.

La présente invention se propose de remédier à ces divers inconvénients dans des conditions simples et de réalisation industrielle facile. L'invention vise en outre une structure particulière de robinet à boule permettant de réaliser le corps de celui-ci en une matière plastique, ceci impliquant des tolérances appréciables, mais sans compromettre l'étanchéité et la fiabilité.

Suivant l'invention, le robinet à boule qui comprend un corps surmonté d'un organe de commande en prise avec une boule obturatrice, percée d'un canal diamétral, logée dans le corps du robinet, montée rotativement autour de l'axe de l'organe de commande et en contact avec deux joints annulaires d'étanchéité est caractérisé en ce que du côté opposé à l'organe de commande, le corps comporte une coupelle d'appui rapportée pour la boule, présentant un évidement sensiblement coaxial à l'axe de rotation de la boule, avec lequel cette dernière vient en contact, des moyens étant prévus pour assurer le guidage en rotation de la boule par interaction de celle-ci et de ladite coupelle d'appui.

Cette structure permet de dissocier les fonctions de guidage de la boule et celles d'étanchéité de cette dernière relativement aux brides ou au corps du robinet. Elle se prête en outre à une réalisation simplifiée du corps du robinet, notamment en matière plastique.

De plus, le montage du robinet s'en trouve facilité.

Selon une réalisation préférée de l'invention, la coupelle d'appui présente un orifice central dans lequel vient se loger une saillie de révolution de la boule. En particulier, l'orifice central de la coupelle peut constituer un palier cylindrique, la saillie de la boule constituant un tourillon qui vient se loger dans ledit palier. Par ailleurs l'invention prévoit avantageusement que la boule et la coupelle d'appui soient en contact suivant des surfaces de guidage s'étendant transversalement par rapport à l'axe de rotation de la boule, et notamment orthogonales à celui-ci.

Dans une première réalisation de l'invention, la coupelle d'appui est constituée par deux coquilles de forme complémentaire, accolées par leurs tranches.

Si le corps du robinet comporte un logement cylindrique pour la boule, la coupelle d'appui est avantageusement constituée par au moins un segment cylindrique s'adaptant audit logement intérieur, tandis qu'une bague portant le siège de la boule est épaulée contre un bord extérieur de cette coupelle d'appui.

Selon une autre particularité intéressante de l'invention, la boule est maintenue du côté de l'organe de commande par une coupelle d'appui analogue à celle logée dans le corps du côté opposé à cet organe, et montée de façon sensiblement symétrique, la surface extérieure de cette coupelle d'appui épousant la forme du logement du corps.

Le guidage de la boule peut être ainsi assuré dans les meilleures conditions, le montage des pièces restant très aisé.

Selon une seconde réalisation particulière, la coupelle d'appui constitue une tulipe enveloppant la surface de la boule opposée à l'organe d'actionnement. Cette tulipe peut notamment présenter une surface intérieure sensiblement hémisphérique, tronquée en regard des orifices du corps du robinet prévus pour la circulation du fluide, la surface extérieure de la tulipe épousant celle du logement du corps.

Dans cette version, le corps du robinet est avantageusement obturé par un chapeau pénétrant dans le logement de celui-ci et présentant un rebord annulaire servant de butée au bord libre de la coupelle d'appui.

Cette seconde réalisation est particulièrement adaptée à une exécution en matière plastique moulée, telle que le polyéthylène, le chapeau pouvant être alors collé ou thermo-soudé sur le corps.

D'autres particularités de l'invention seront encore mises en évidence dans la description ci-après.

Aux dessins annexés, donnés à titre d'exemples non limitatifs, on a représenté divers modes d'exécution de robinets à boule selon l'invention.

La figure 1 est une vue partie en élévation latérale, partie en coupe par le plan passant par l'axe de rotation de la boule et par l'axe du corps, le robinet étant ouvert.

La figure 2 est une coupe transversale partielle, selon II-II de la figure 1.

La figure 3 est une vue de dessus éclatée de la boule et des coupelles d'appui.

La figure 4 est un schéma perspectif de deux coquilles constituant une coupelle d'appui.

Les figures 5 et 6 sont des schémas partiels en coupe montrant des variantes de réalisation du siège de la boule.

La figure 7 est une vue analogue à la figure 1 d'un second mode de réalisation du robinet dont le corps est en matière plastique.

La figure 8 est la demi-coupe selon VIII-VIII de la figure 7.

La figure 9 est la vue en plan et en coupe selon IX-IX de la figure 7.

La figure 10 est une vue partielle correspondant à la figure 7 de la partie inférieure du corps montrant la coupelle d'appui, la boule étant retirée.

La figure 11 est un schéma perspectif montrant la moitié d'une coquille constituant une coupelle d'appui en tulipe.

Les figures 12 et 13 sont des schémas partiels de variantes de montage du couvercle et du siège.

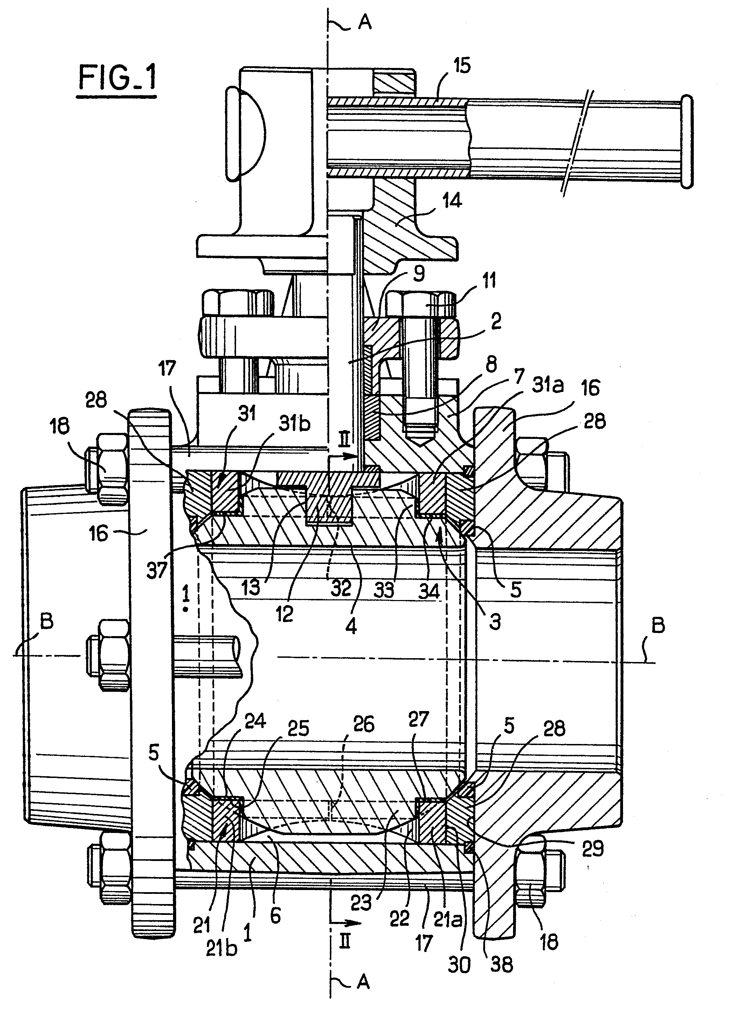

Dans la première réalisation de l'invention visée aux figures 1 à 4 des dessins annexés, le robinet à boule comprend un corps 1 surmonté d'une tige de commande 2 en prise avec une boule obturatrice 3, percée d'un canal diamétral 4, logée dans le corps 1, montée rotativement autour de l'axe A-A de l'organe de commande 2 et en contact avec deux joints annulaires d'étanchéité 5.

Plus précisément, le corps 1 est avantageusement réalisé en métal et il présente un logement intérieur cylindrique 6 dans lequel prend place la boule 3, constituée par une sphère tronquée.

Le corps 1 est surmonté de façon connue par une lanterne 7 traversée par la tige 2 avec interposition d'un joint d'étanchéité 8 serré par un presse-étoupe 9 grâce à des boulons 11.

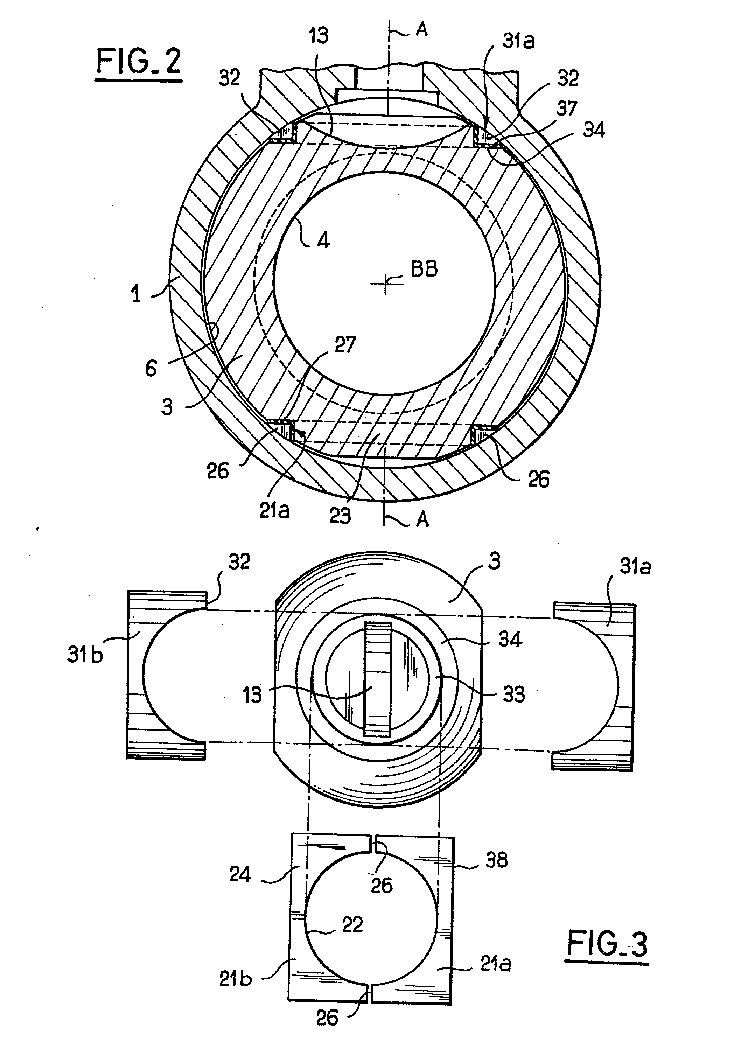

La tige 2 porte à son extrémité intérieure au corps 1 une lame 12 qui est engagée dans une rainure 13 de la boule 3 (figure 2).

A son autre extrémité, la tige 2 est en prise avec une tête 14 dans laquelle est engagée une poignée de manoeuvre 15.

Le robinet est encore complété par des flasques 16 de raccordement aux conduites (non figurées), ces flasques 16 étant pressés contre le corps par des tirants 17 et des écrous 18.

Conformément à la présente invention, du côté opposé à la tige de commande 2, le corps 1 comporte une coupelle d'appui rapportée 21 pour la boule 3. La coupelle 21 présente un évidement 22 sensiblement coaxial à l'axe de rotation AA de la boule 3, avec lequel cette dernière vient en contact.

L'évidement 22 est constitué dans l'exemple considéré par un orifice central de la coupelle 21, formant un palier cylindrique, dans lequel pivote une saillie 23 de la boule 3 formant un tourillon cylindrique, qui vient ainsi se loger dans ledit palier.

Des moyens de guidage complémentaires sont prévus entre la boule 3 et la coupelle 21. En effet, la saillie 23 est raccordée à la partie sphérique de la boule 3 par un épaulement annulaire 24 situé en regard de la surface terminale plate 25 de la coupelle 21. L'épaulement 24 est ainsi centré sur l'axe A-A et s'étend transversalement à cet axe.

Dans la réalisation préférée décrite, la coupelle d'appui 21 est constituée par deux coquilles de forme complémentaire 21a, 21b (figure 3) accolées par leur tranche 26. Ces coquilles 21a, 21b sont avantageusement réalisées en métal et une partie au moins de la surface de l'évidement 22 prévue pour la saillie 23 de la boule 3 est pourvue d'une garniture anti-friction 27, telle qu'une collerette à section en équerre par exemple en résine polyfluorée (PTFE) ou en matière thermoplastique ou céramique.

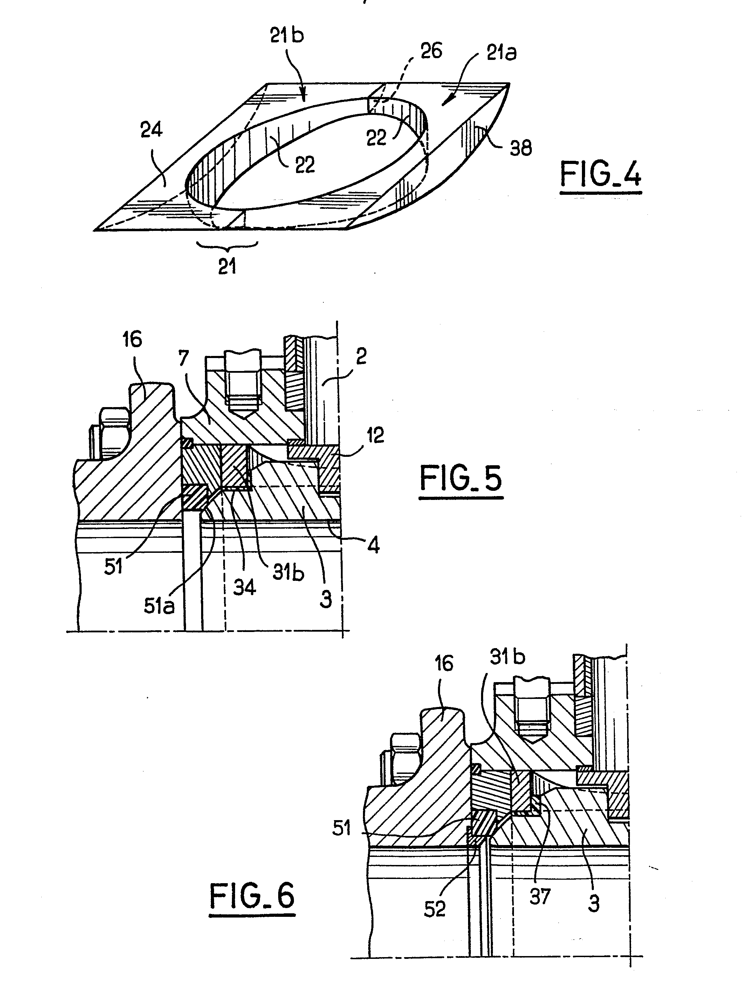

La coupelle d'appui 21 est ainsi constituée par deux segments cylindriques s'adaptant au logement intérieur cylindrique 6 du corps 3. Les figures 3 et 4 montrent clairement la forme des deux coquilles 21a, 21b, constituées par des segments cylindriques évidés.

Selon une autre particularité de l'invention, les sièges 5 de la boule 3, constitués dans l'exemple représenté par des anneaux toriques en élastomère, naturel ou synthétique, sont logés dans des gorges pratiquées dans les bagues 28 s'étendant autour de l'axe B-B du corps 1. Les bagues 28 présentent des faces d'appui planes 29, 30 respectivement épaulées contre la face terminale des brides 16 et les bords extérieurs des deux coquilles 21a, 21b de la coupelle 21.

Selon une autre particularité de l'invention, la boule 3 est maintenue du côté de la tige de commande 2 par une seconde coupelle d'appui 31 analogue à la coupelle 21 située côté opposé à la tige 2. La surface extérieure de cette seconde coupelle d'appui 31 épouse la forme du logement 6 du corps 1.

La coupelle 31 est également formée de deux coquilles complémentaires 31a, 31b (figure 3) en appui par leur tranche 32 et dont les bords extérieurs servent d'épaulements aux bagues 28.

Complémentairement, la boule 3 présente un tourillon 33 et un épaulement 34 (analogues aux parties 23 et 24 diamétralement opposées) et qui sont en contact avec les surfaces correspondantes en équerre de la coupelle 31 avec interposition d'une collerette anti-friction 37.

L'étanchéité du corps du robinet est complétée par des joints 38 logés entre le corps 1, les bagues 28 et les brides 16.

Dans la structure de robinet ainsi prévue, le montage de la boule 3 portant autour des tourillons 23 et 33 les collerettes 27 et 37 anti-friction, s'effectue très aisément, par insertion dans le corps 1 de cette boule (orientée de préférence de façon que l'axe B-B soit vertical), après mise en place d'une bague 28 et de deux coquilles telles que 21b et 31b appartenant respectivement à la coupelle 21 et à la coupelle 31, après quoi les deux autres coquilles 21a, 31a sont placées puis la seconde bague 28.

On constate ainsi que le guidage géométrique de la boule 3 est parfaitement défini grâce aux coupelles 21, 31 qui empêchent toute vibration ou déplacement parasite selon les axes A-A et B-B même en cas d'ouverture partielle. Les sièges 5 ne sont plus de ce fait sollicités et assurent au mieux la fonction étanchéité avec une longévité accrue.

Bien entendu cette structure se prête à diverses variantes. Ainsi le guidage de la boule par les coupelles d'appui pourrait être réalisé par des surfaces tronconiques au lieu de deux surfaces en équerre.

Dans la version de la figure 5, le siège 51 est constitué par une bague en PTFE ou matière thermoplastique ou un composite élastomère-métal présentant une face de contact 51a profilée en zone sphérique.

Dans la version de la figure 6, la même bague 51 est épaulée par un rebord rapporté 52 de la bride 16. La collerette 37 est ici une garniture épaisse en PTFE, logée dans les épaulements correspondants de la boule 3.

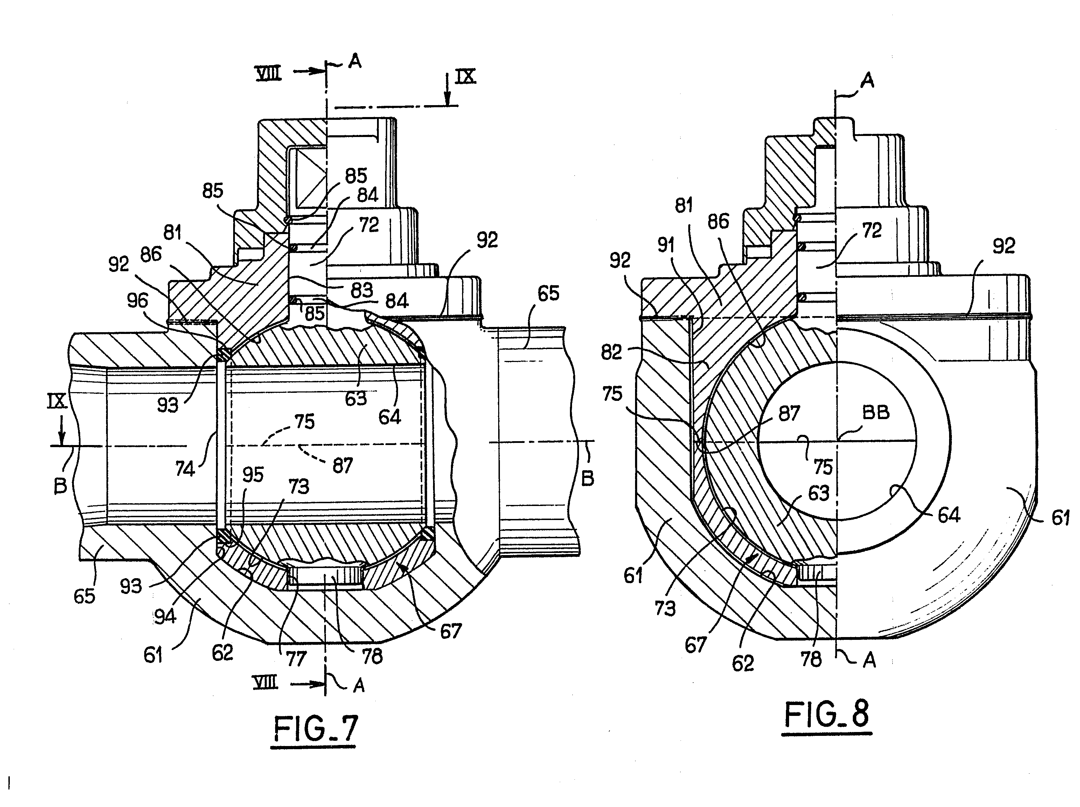

Dans la réalisation de l'invention selon les figures 7 à 11, toutes les pièces constitutives sont en matière plastique.

Le corps 61 est à section en U ainsi que le logement interne 62 dans lequel prend place la boule 63 dont on voit le canal diamétral 64. Le corps est ici solidaire de deux embouts 65 de raccordement à la conduite.

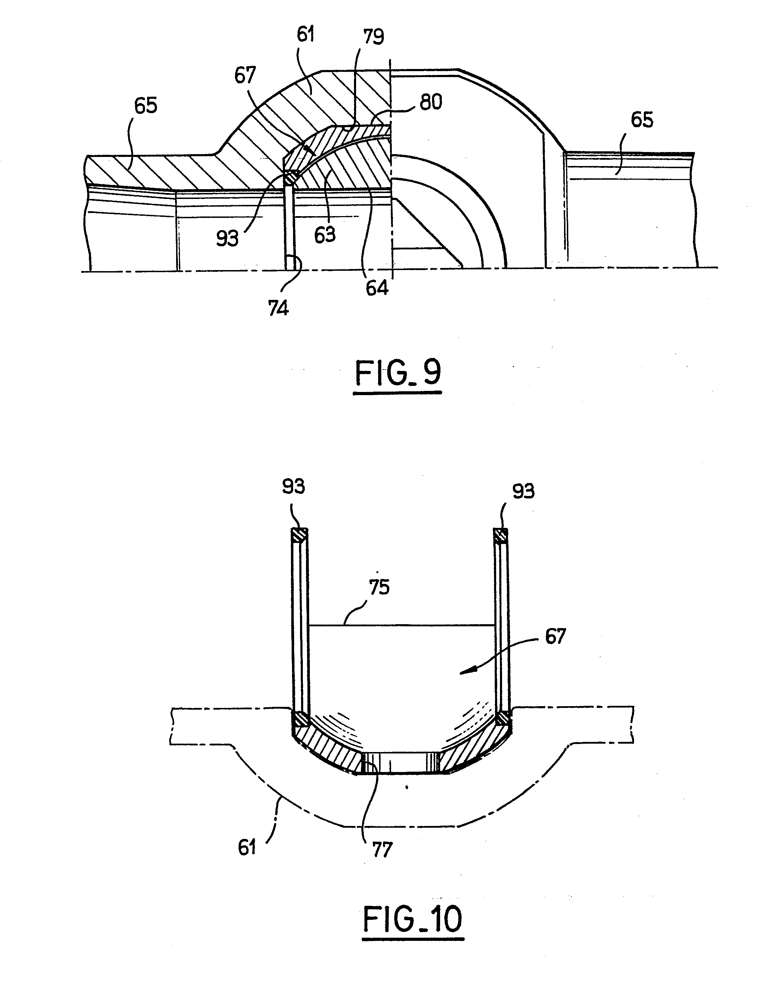

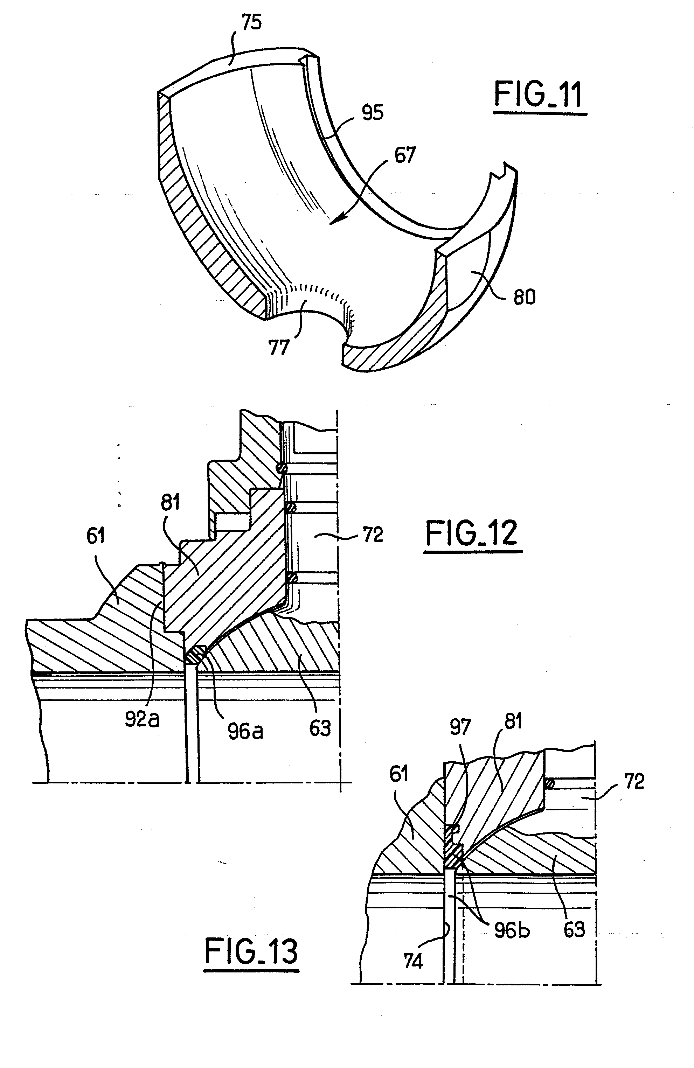

Selon une particularité remarquable de l'invention, la boule 63 est logée dans une coupelle d'appui 67 en forme de tulipe (figures 10 et 11) enveloppant la surface de la boule 63 opposée à l'organe d'actionnement, lequel est constitué par une tige 72 prolongeant la boule 63 et définissant son axe de rotation A-A.

Plus précisément, on voit que la coupelle d'appui 67 présente une surface intérieure 73 sensiblement hémisphérique, tronquée en regard des orifices 74 du corps 61 du robinet prévus pour la circulation du fluide, la surface extérieure ayant un profil en U s'inscrivant dans la surface de forme complémentaire du logement 62 du corps.

La coupelle 67 est terminée au niveau du plan diamétral passant par l'axe B-B du corps 61 par un bord plat 75.

La coupelle 67, qui est formée par moulage, présente du côté opposé à la tige 72 un évidement circulaire -ou palier- 77 dans lequel pénètre et est guidé rotativement un tourillon 78 de la boule 63, diamétralement opposé à ladite tige 72.

Pour assurer son centrage, la coupelle d'appui 67 présente un méplat 80 qui coopère avec un méplat correspondant 79 prévu dans la surface intérieure du logement 62 du corps 61 (figures 9 et 11).

Selon une autre particularité de la présente réalisation, le corps 61 est obturé par un chapeau 81 en matière plastique moulée, pénétrant dans le logement 62 et présentant deux ailes latérales 82 dont les bords 87 servent de butée au bord libre 75 de la coupelle d'appui 67 dans le plan diamétral contenant l'axe B-B (figure 8). Le chapeau 81 comporte d'autre part un conduit cylindrique 83 traversé par la tige 72 qui présente diverses rainures 84 dans lesquelles sont logés des joints toriques échelonnés 85. La surface intérieure du chapeau 81 présente encore une portée sphérique 86 qui s'étend le long des ailes 82 et correspond à la portée sphérique 73 de la coupelle d'appui 67. La portée 86 assure le guidage de la partie de la boule 63 opposée au tourillon 78.

Comme on le voit d'autre part sur la figure 8, le corps 61 présente, du côté opposé au fond du logement 62, une ouverture 91 permettant l'introduction directe de la coupelle d'appui 67 et de la boule 63. Cette ouverture 91 est obturée par le chapeau 81 qui est ensuite hermétiquement fixé sur le corps, par collage ou de préférence par thermo-soudage électrique.

Dans la réalisation des figures 7 et 8, le chapeau 81 est soudé au corps selon un plan de liaison 92 perpendiculaire à l'axe A-A de rotation de la boule 63, ce plan de liaison étant constitué par un bord d'appui commun au corps 61 et au chapeau 81.

L'étanchéité de la boule est assurée au moyen de sièges annulaires profilés 93, par exemple en résine polyfluorée, insérés entre la boule 63 et un rebord plat 94 du logement 62. Chaque siège 93 est logé dans une gorge semi-circulaire 95 ménagée dans le bord extérieur de la coupelle 67. A la gorge 95 fait suite une gorge analogue 96 réservée dans le bord des ailes 82 qui fait face aux orifices 74.

Grâce à la structure ainsi prévue, le prix de revient du robinet à boule est particulièrement réduit et la précision du moulage peut être assez faible pour le corps 61 et le chapeau 81, seules la boule 63 et la coupelle 67 nécessitant des caractéristiques dimensionnelles précises.

Bien entendu, des variantes d'exécution sont possibles. Ainsi, à la figure 12, la jonction entre le corps 61 et le chapeau 81 est réalisée selon une surface cylindrique 92a coaxiale à l'axe de rotation A-A de la boule 63. La figure 12 montre aussi une variante du siège 96a, de contour hexagonal logé dans une gorge à trois faces du chapeau 81 et de la coupelle 67.

Dans la version de la figure 13, le siège 96b présente une queue d'ancrage 97 encastrée dans une deuxième gorge annulaire des bords du chapeau 81 et de la coupelle 67. Ce joint est comprimé par la face 74 du corps 61 lors de la mise en place du chapeau 81 dans l'ouverture 91 du logement 62.

On remarquera que dans les diverses versions prévues par l'invention, l'organe obturateur rotatif est guidé en rotation par des organes en coupelles bloqués dans le corps, si bien que la fonction guidage est dissociée de la fonction étanchéité. On évite le déplacement transversal de la boule et son placage sur les sièges, ce qui accroît la durée de service de ceux-ci.

Bien entendu, l'invention n'est pas limitée aux réalisations décrites et on peut apporter à celles-ci des variantes d'exécution. Ainsi dans la version des figures 1 à 4 par exemple, l'évidement de la coupelle 21 prévu pour le tourillon 23 de la boule pourrait présenter, de même que ce tourillon, une surface tronconique.

REVENDICATIONS

1. Robinet à boule comprenant un corps (1,61) surmonté d'un organe de commande (2,72) en prise avec une boule obturatrice (3,63), percée d'un canal diamétral (4,64), logée dans le corps du robinet, montée rotativement autour de l'axe de l'organe de commande et en contact avec deux joints annulaires (5,51,93) d'étanchéité, caractérisé en ce que du côté opposé à l'organe de commande (2,72), le corps (1,61) comporte une coupelle d'appui (21,67) rapportée pour la boule (3,63), présentant un évidement (22,77) sensiblement coaxial à l'axe de rotation (A-A) de la boule (3,63), avec lequel cette dernière vient en contact, des moyens étant prévus pour assurer le guidage en rotation de la boule (3,63) par interaction de celle-ci et de ladite coupelle d'appui (21,67).

2. Robinet à boule conforme à la revendication 1, caractérisé en ce que la coupelle d'appui (21,67) présente un orifice central (22,77) dans lequel vient se loger une saillie (23,78) de révolution de la boule (3,63).

3. Robinet à boule conforme à la revendication 2, caractérisé en ce que l'orifice central (22,77) de la coupelle (21,67) est un palier cylindrique et en ce que la saillie (23,78) de la boule constitue un tourillon qui vient se loger dans ledit palier.

4. Robinet à boule conforme à l'une des revendications 1 à 3, caractérisé en ce que la boule (3) et la coupelle d'appui (21) sont en contact suivant des surfaces de guidage (24,25) s'étendant transversalement par rapport à l'axe de rotation (A-A) de la boule (3).

5. Robinet à boule conforme à l'une des revendications 1 à 4, caractérisé en ce que la coupelle d'appui (21) est constituée par deux coquilles (21a, 21b) de forme complémentaire, accolées par leur tranche (26).

6. Robinet à boule conforme à l'une des revendications 1 à 5, caractérisé en ce que la coupelle d'appui (21) est en métal et en ce qu'une partie au moins de la surface de l'évidement (22) prévu pour la boule (3) est pourvue d'une garniture anti-friction (27).

7. Robinet à boule conforme à l'une des revendications 1 à 6, comprenant un corps métallique (1) dont le logement intérieur (6) est cylindrique, caractérisé en ce que la coupelle (21) est constituée par au moins un segment cylindrique s'adaptant audit logement intérieur (6).

8. Robinet à boule conforme à l'une des revendications 1 à 7, caractérisé en ce qu'une bague (28) portant le siège (5) de la boule (3) est épaulée contre un bord extérieur (38) de la coupelle d'appui (21).

9. Robinet à boule conforme à l'une des revendications 1 à 8, caractérisé en ce que la boule (3,63) est maintenue du côté de l'organe de commande (2,72) par une coupelle d'appui (31,81) analogue à celle logée dans le corps du côté opposé à cet organe, la surface extérieure de cette coupelle d'appui (31,81) épousant la forme du logement (6,91) du corps (1,61).

10. Robinet à boule conforme à l'une des revendications 1 à 9, caractérisé en ce que la coupelle d'appui (67) constitue une tulipe enveloppant la surface de la boule (63) opposée à l'organe d'actionnement (72).

11. Robinet à boule conforme à la revendication 10, caractérisé en ce que la coupelle d'appui (67) présente une surface intérieure (73) sensiblement hémisphérique, tronquée en regard des orifices (74) du corps (61) du robinet prévus pour la circulation du fluide, la surface extérieure de la coupelle (67) épousant celle du logement (62) du corps (61).

12. Robinet à boule conforme à la revendication 11, caractérisé en ce que la coupelle d'appui (67) présente un méplat de centrage (78) qui coopère avec un méplat (79) correspondant prévu dans la surface intérieure du logement du corps (61).

13. Robinet à boule conforme à l'une des revendications 10 à 12, caractérisé en ce que le corps (61) est obturé par un chapeau (81) pénétrant dans le logement (91) de celui-ci et présentant un rebord annulaire (87) servant de butée au bord libre (75) de la coupelle d'appui (67).

14. Robinet à boule conforme à l'une des revendications 10 à 13, caractérisé en ce que le bord extérieur de la coupelle d'appui (67) situé en regard de l'un des orifices (74) du logement (62) du corps (61) présente une gorge annulaire (96) dans laquelle est logé le siège (93) de la boule (63), lequel est constitué par une bague de matière souple.

15. Siège conforme à l'une des revendications 10 à 14, caractérisé en ce que le corps (61) présente, du côté opposé au fond du logement (62), une ouverture (91) permettant l'introduction directe de la coupelle d'appui (67) et de la boule (63), cette ouverture (91) étant obturée par un chapeau (81) portant l'organe de commande (72) et qui est ensuite hermétiquement fixé sur le corps.

16. Robinet à boule conforme à l'une des revendications 10 à 15, caractérisé en ce que le corps (61), le chapeau (81) obturant le logement (62) du corps et la coupelle d'appui (67) de la boule (63) sont réalisés en matière plastique, le chapeau (81) étant fixé au corps (61) par collage ou soudage.

17. Robinet à boule conforme à la revendication 16, caractérisé en ce que le chapeau (81) est associé au corps (61) selon un plan de liaison (92) perpendiculaire à l'axe de rotation (A-A) de la boule (63).

18. Robinet à boule conforme à la revendication 16, caractérisé en ce que le chapeau (81) est rendu solidaire du corps (61) selon une surface de liaison cylindrique (92a) coaxiale à l'axe de rotation (A-A) de la boule (63).

FIG.1

FIG. 2

FIG. 3

21b 26 21a

24 22 22 22 38 **FIG. 4**

21

16 7 2

12 **FIG. 5**

4

51 3

51a 34 31b

16 31b

51

**FIG. 6**

52 37 3

FIG.7

FIG.8

0133092

FIG. 9

FIG. 10

0133092

**FIG.11**

**FIG.12**

**FIG.13**

Office européen
des brevets

**RAPPORT DE RECHERCHE EUROPEENNE**

**0133092**
Numéro de la demande

EP 84 40 1471

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl ³) |
|---|---|---|---|
| A | US-A-3 039 484 (BREDTSCHNEIDER) <br> * Colonne 3, lignes 56-68; figures * | 1-9 | F 16 K 5/06 |
| | --- | | |
| A | US-A-3 589 675 (SCARAMUCCI) <br><br> * Colonne 3, lignes 6-37; figures * | 1-5,7-9 | |
| | --- | | |
| A | US-A-3 705 707 (SCARAMUCCI) <br> * Colonne 4, ligne 36 - colonne 5, ligne 20; figures * | 1-4,9 | |
| | --- | | |
| A | US-A-3 647 179 (SCARAMUCCI) | | |
| | --- | | **DOMAINES TECHNIQUES RECHERCHES (Int. Cl. ³)** |
| A | FR-A-1 437 878 (PICHON) | | F 16 K |
| | ----- | | |

Le présent rapport de recherche a été établi pour toutes les revendications

| Lieu de la recherche | Date d'achèvement de la recherche | Examinateur |
|---|---|---|
| LA HAYE | 11-10-1984 | VAN REETH A.L.J. |